# EUROPÄISCHE PATENTANMELDUNG

(11) **EP 1 876 336 A2**
(43) Veröffentlichungstag der Anmeldung: **09.01.2008**
(21) Anmeldenummer: 07111731.1
(22) Anmeldetag: 04.07.2007
(51) Int. Cl.: F02C 7/24, F01D 5/08

(54) **Gasturbinenbauteil für Flugtriebwerke sowie Verfahren zur Herstellung von Gasturbinenbauteilen für Flugtriebwerke**

(30) Priorität: 06.07.2006 DE 102006031305
(71) Anmelder: MTU Aero Engines GmbH, 80995 München (DE)
(72) Erfinder: Meier, Reinhold, 84405, Dorfen (DE)

(57) **Zusammenfassung**

Die Erfindung betrifft ein Gasturbinenbauteil für Flugtriebwerke, wie Mantelsegment einer Gasturbine eines Flugtriebwerks, mit einem wenigstens einem Trägerelement (10), welches für eine Wärmedämmung eine Vielzahl von Zellen (12) ausbildet, in welche Hohlkörper (14) eingebracht sind.

## Beschreibung

Die Erfindung betrifft ein Gasturbinenbauteil für Flugtriebwerke sowie ein Verfahren zur Herstellung von Gasturbinenbauteilen für Flugtriebwerke.

Im Bereich der Gasturbinen für Flugtriebwerke treten bereichsweise sehr hohe Temperaturen auf. In der Regel versucht man, gewisse Bauteile bzw. Bauteilabschnitte der Gasturbinen zumindest vor extrem hohen Temperaturen zu schützen. Zu diesem Zweck wird versucht, durch geeignete Maßnahmen der Wärmedämmung den entsprechenden Schutz zu erreichen. Ein beispielhafter Bereich, bei dem sich diese Problematik stellt, sind die Gehäuse von Flugtriebwerken, die man häufig vor heißen Temperaturen zu schützen versucht. Dieses kann beispielsweise so erfolgen, dass sogenannte Shrouds bzw. Shroud-Segmente bzw. Mantelsegmente innerhalb der Gasturbinengehäuse beabstandet zu diesen angeordnet werden und mit geeigneten Maßnahmen der Wärmedämmung versehen sind, um so das Gasturbinengehäuse vor übermäßig hoher thermischer Belastung zu schützen. Solche Shrouds bzw. Shroud-Segmente bzw. Mantelsegmente bilden dabei häufig zusätzlich Einlaufbeläge für das Zusammenwirken mit Laufschaufeln, insbesondere Turbinenlaufschaufeln, aus.

Es ist bereits bekannt, Bauteile für eine Wärmedämmung mit einer Wärmedämmschicht zu versehen. Ferner ist bekannt, Bauteile zu kühlen, was insbesondere auch in Kombination mit dem Vorsehen von Wärmedämmschichten erfolgen kann. Eine weitere Möglichkeit der Wärmedämmung besteht darin, Isoliermatten vorzusehen.

Der Erfindung liegt nun die Aufgabe zugrunde, ein Gasturbinenbauteil für Flugtriebwerke zu schaffen, das bei geringen Herstellungskosten ein gutes Wärmedämmverhalten aufweist.

Erfindungsgemäß wird ein Gasturbinenbauteil gemäß Anspruch 1 vorgeschlagen. Ein Verfahren zur Herstellung eines Gasturbinenbauteils ist Gegenstand des Anspruchs 6. Bevorzugte Weiterbildungen sind Gegenstand der Unteransprüche.

Gemäß der Erfindung wird also insbesondere ein Gasturbinenbauteil für Flugtriebwerke vorgeschlagen, das zumindest ein Trägerelement aufweist. Das wenigstens eine Trägerelement bildet für eine Wärmedämmung eine Vielzahl von Zellen aus, in welche Hohlkörper eingebracht sind.

Die Hohlkörper können beispielsweise aus Metall oder aus Keramik sein. Das Trägerelement, das auch als tragende Struktur bezeichnet werden kann, kann einseitig oder beidseitig mit Zellen versehen sein. Dieses kann insbesondere so sein, dass das Trägerelement eine Wand aufweist, wobei sämtliche der von dem Trägerelement ausgebildeten Zellen, in welche Hohlkörper eingebracht sind, auf der gleichen Seite dieser Wand angeordnet sind und an diese Wand angrenzen, bzw. so, dass auf den beiden, gegenüberliegenden Seiten einer solchen Wand jeweils Zellen vorgesehen sind, die jeweils an diese Wand angrenzen. Es kann vorgesehen sein, dass die Zellen einlagig mit Hohlkörpern versehen bzw. befüllt sind. Es kann aber auch vorgesehen sein, dass die Zellen mehrlagig mit Hohlkörpern versehen bzw. befüllt sind.

Das Trägerelement bzw. die tragende Struktur bzw. der Träger ist in bevorzugter Gestaltung mittels PIM (Pulver Injection Moulding = Pulverspritzgießen) hergestellt. Der Träger bzw. die tragende Struktur bzw. das Trägerelement kann beispielsweise aus Metall oder aus Keramik sein. In entsprechender Weise kann das Trägerelement bzw. die tragende Struktur bzw. der Träger - im Folgenden kurz Trägerelement - beispielsweise mittels MIM (Metal Injection Moulding = Metallpulverspritzgießen) oder mittels CIM (Ceramic Injection Moulding = Keramikpulverspritzgießen) hergestellt sein. In einer besonders zu bevorzugenden Ausgestaltung wird das Trägerelement im PIM-Verfahren, insbesondere im MIM-Verfahren oder CIM-Verfahren, hergestellt, wobei im Rahmen dieser Herstellung ein Sintern, und zwar insbesondere Vorsintern und Endsintern, erfolgt. Dabei kann vorgesehen sein, dass das Befüllen der Zellen mit ein- oder mehrlagigen Hohlkörpern von einer oder von beiden Seiten vor dem Endsintern, also insbesondere im Grünling, Bräunling oder in einer Vorsinterung, erfolgt.

In vorteilhafter Ausgestaltung wird das Trägerelement mit den in seinen Zellen befindlichen Hohlkörpern mit einer Deckschicht versehen. Eine solche Deckschicht kann beispielsweise mittels eines Metall- oder Keramikschlickers aufgebracht sein. Es kann vorgesehen sein, dass mittels eines solchen Metall- oder Keramikschlickers bzw. einer solchen Deckschicht gleichzeitig die Hohlkörper mit dem Trägerelement beim Sintern verbunden werden.

Ferner kann vorgesehen sein, dass auf die Deckschicht eine Funktionsschicht bzw. Wärmedämmschicht aufgebracht ist, bzw. aufgebracht wird. In vorteilhafter Weiterbildung ist das Gasturbinenbauteil bzw. das Trägerelement ferner mit Kühlrippen versehen, die beispielsweise auf der Bauteilunterseite vorgesehen sein können. Es kann auch - insbesondere in dem Fall, dass sich eine letzte Deckschicht nicht mit Schlicker herstellen lässt - vorgesehen sein, dass eine Abschlussfläche mittels eines - insbesondere bekannten - Metallspritzverfahrens erzeugt wird.

Das erfindungsgemäße Gasturbinenbauteil kann in vorteilhafter Ausgestaltung insbesondere in ein in integrierter Bauweise hergestelltes Wärmedämmelement sein, und zwar insbesondere ein gut isolierendes, stabiles, kostengünstig herstellbares Wärmedämmelement.

Erfindungsgemäß wird ferner ein Verfahren zur Herstellung eines Gasturbinenbauteils für Flugtriebwerke gemäß Anspruch 6 vorgeschlagen.

Gemäß einem erfindungsgemäßen Verfahren zur Herstellung eines - insbesondere erfindungsgemäßen - Gasturbinenbauteils für Flugtriebwerke, insbesondere zur Herstellung eines Mantelsegments bei einer Gasturbine eines Flugtriebwerks, wird vorgeschlagen, ein mit Zellen versehenes Trägerelement durch Pulverspritzgießen (PIM), insbesondere durch Metallpulverspritzgießen (MIM) oder Keramikpulverspritzgießen (CIM), herzustellen. In die Zellen dieses Trägerelements werden Hohlkörper, die beispielsweise aus Metall oder Keramik sind, eingebracht. In vorteilhafter Ausgestaltung wird anhand der Zellen des Trägerelements eine Deckschicht aufgebracht. Die Deckschicht kann beispielsweise mittels eines Metall- oder Keramikschlickers aufgebracht sein. Es kann vorgesehen sein, dass das Trägerelement mittels der Deckschicht mit Hohlkörpern bzw. mit den Hohlkörpern verbunden ist. Ferner kann auf die Deckschicht eine Funktionsschicht aufgebracht sein.

Die Deckschicht bzw. Zwischenschicht kann beispielsweise aus einem Werkstoff auf metallischer Basis sein, wie beispielsweise auf Basis von Ni oder Co. Die Funktionsschicht kann beispielsweise ein Einlaufbelag sein. Diese Funktionsschicht bzw. dieser Einlaufbelag kann beispielsweise aus einem Material auf metallischer oder keramischer Basis sein; in vorteilhafter Gestaltung ist diese Funktionsschicht bzw. dieser Einlaufbelag eine MCrAIY-Schicht.

Die im Trägerelement vorgesehenen Zellen sind insbesondere Vertiefungen bzw. Hohlräume, die im Trägerelement ausgebildet werden. Die Zellen können beispielsweise wabenartig sein.

Im Folgenden soll nun ein Ausführungsbeispiel der Erfindung anhand der Figur näher erläutert werden. Dabei zeigt:

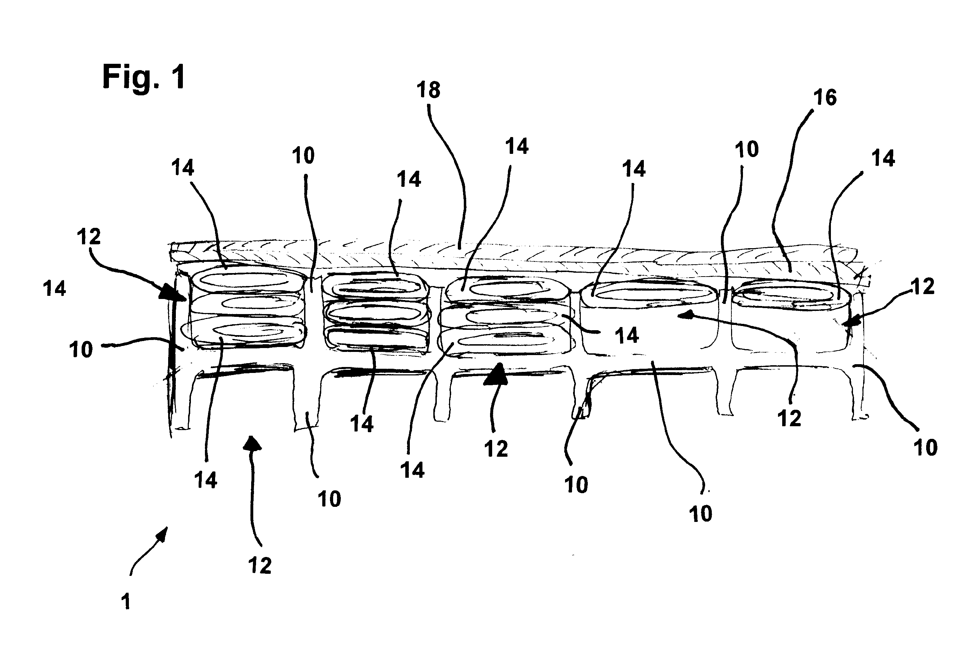

- Fig. 1: ein beispielhaftes erfindungsgemäßes Gasturbinenbauteil in teilweiser Ansicht, wobei anhand dieses Gasturbinenbauteils auch ein beispielhaftes erfindungsgemäßes Verfahren erläutert werden soll.

Fig. 1 zeigt ein - hier als Shroud bzw. Shroud-Segment bzw. Mantelsegment 1 - gestaltetes, beispielhaftes erfindungsgemäßes Gasturbinenbauteil 1 in teilweiser Ansicht.

Das Mantelsegment bzw. Shroud bzw. Shroud-Segment 1 weist eine tragende Struktur bzw. einen Träger bzw. ein Trägerelement 10 auf, das einseitig bzw. (hier) beidseitig mit Zellen 12 versehen ist. Das Trägerelement 10, das beispielsweise in Metall oder in Keramik ausgeführt sein kann, ist dabei mittels der PIM-Herstellungsmethode hergestellt. In die Zellen 12 des Trägerelements 10 sind Hohlkörper 14 eingebracht, die beispielsweise aus Metall oder aus Keramik sind.

Die Hohlkörper 14 können beispielsweise einlagig oder mehrlagig in die Zellen 12 eingebracht sein. Das Befüllen der Zellen 12 mit einlagigen oder mehrlagigen Hohlkörpern von einer oder von beiden Seiten erfolgt in besonders vorteilhafter Gestaltung vor dem Endsintern, also im Grünling, Bräunling oder in einer Vorsinterung. In diesen Fertigungsprozess kann mit einem entsprechenden Metall- oder Keramikschlicker eine Deckschicht 16 aufgebracht werden, die gleichzeitig die Hohlkörper 14 mit dem Trägerelement 10 beim Sintern sich verbinden soll. Auf die geschlossene Deckschicht 16 wird bzw. ist eine Funktionsschicht 18 aufgebracht, wie beispielsweise eine einlauffähige Wärmedämmschicht oder Heißgaskorrosionsschutzschicht. Die angesprochene Wärmedämmschicht kann beispielsweise eine Wärmedämmschicht mit graduiertem Schichtaufbau sein und somit neben einer Wärmedämmung gleichzeitig ein gutes Einlaufverhalten gewährleisten.

Die Bauteilunterseite kann beispielsweise gleichzeitig für eine gute Wärmeableitung Kühlrippen aufweisen. Solche Kühlrippen können beispielsweise so ausgestaltet sein, dass sie in Strömungsrichtung der Kühlluft verlaufen.

Alternativ zur Herstellung der (letzten) Deckschicht mit Schlicker kann auch vorgesehen sein, dass mittels bekannter Metallspritzverfahren eine Abschlussfläche erzeugt wird.

Wie insbesondere das Ausführungsbeispiel verdeutlicht, legt das erfindungsgemäße Verfahren bzw. das erfindungsgemäße Gasturbinenbauteil die Basis für Gestaltungen, die besondere Vorteile aufweisen, die im Folgenden dargelegt werden und alternativ oder kumulativ gegeben sein können: Zumindest mittels bevorzugten Weiterbildungen des erfindungsgemäßen Verfahrens kann ein kostengünstiges integrales Bauteil hergestellt werden, welches ein besonders gutes Wärmedämmverhalten aufweist. Dieses Bauteil kann beispielsweise Shroud-Segment sein, das den Heißgasbereich von tragenden Strukturelementen isolieren soll. Damit wird die Lebensdauer des Bauteils erhöht, da die Spannungen, die über den Bimetalleffekt auftreten, vermindert werden. Gleichzeitig kann mit dieser Wärmedämmung der Dichtspalt zwischen der Schaufelblattspitze und der Dichtung klein und gleichmäßig über den gesamten Triebwerkseinsatz gehalten werden.

## Patentansprüche

1. Gasturbinenbauteil für Flugtriebwerke, insbesondere Mantelsegment einer Gasturbine eines Flugtriebwerks, mit einem wenigstens einem Trägerelement (10),
**dadurch gekennzeichnet, dass**
das wenigstens eine Trägerelement (10) für eine Wärmedämmung eine Vielzahl von Zellen (12) ausbildet, in welche Hohlkörper (14) eingebracht sind.

2. Gasturbinenbauteil nach Anspruch 1, **dadurch gekennzeichnet, dass** ein, mehrere oder alle der Hohlkörper (14), die in die von dem Trägerelement (10) ausbildeten Zellen (12) eingebracht sind, aus Metall sind.

3. Gasturbinenbauteil nach einem der Ansprüche 1 und 2, **dadurch gekennzeichnet, dass** ein, mehrere oder alle der Hohlkörper (14), die in die von dem Trägerelement (10) ausbildeten Zellen (12) eingebracht sind, aus Keramik sind.

4. Gasturbinenbauteil nach einem der vorangehenden Ansprüche, **dadurch gekennzeichnet, dass** das Trägerelement (10) eine Wand aufweist, wobei sämtliche der von dem Trägerelement (10) ausgebildeten Zellen (12), in die Hohlkörper (14) eingebracht sind, auf der gleichen Seite dieser Wand angeordnet sind, und zwar insbesondere so, dass diese Zellen (12) an diese Wand angrenzen.

5. Gasturbinenbauteil nach einem der vorangehenden Ansprüche, **dadurch gekennzeichnet, dass** das Trägerelement (10) eine Wand aufweist, wobei auf gegenüberliegenden Seiten dieser Wand jeweils Zellen (12) angeordnet sind, in welche Hohlkörper (14) eingebracht sind, und zwar insbesondere so, dass diese Zellen (12) jeweils an diese Wand angrenzen.

6. Verfahren zur Herstellung eines Gasturbinenbauteils (1) für Flugtriebwerke, und insbesondere zur Herstellung eines Gasturbinenbauteils (1) gemäß einem der vorangehenden Ansprüche, mit den Schritten:
- Herstellen eines mit Zellen (12) versehenen Trägerelements (10) durch Pulverspritzgießen (PIM); und
- Einbringen von, insbesondere metallischen oder keramischen, Hohlkörpern (14) in die Zellen (12) des Trägerelements (10).

7. Verfahren nach Anspruch 6, **dadurch gekennzeichnet, dass** nach dem Einbringen der Hohlkörper (14) eine Deckschicht (16) aufgebracht wird.

8. Verfahren nach Anspruch 7, **dadurch gekennzeichnet, dass** die Deckschicht mittels eines Metall- oder Keramikschlickers aufgebracht wird.

9. Verfahren nach einem der Ansprüche 7 und 8, **dadurch gekennzeichnet, dass** das Trägerelement (10) mittels der Deckschicht mit Hohlkörpern (14) verbunden ist.

10. Verfahren nach einem der Ansprüche 6 bis 9, **dadurch gekennzeichnet, dass** auf die Deckschicht eine Funktionsschicht aufgebracht wird.
